# EUROPEAN PATENT APPLICATION

(11) **EP 1 277 886 A2**
(43) Date of publication of application: **22.01.2003**
(21) Application number: 01129029.3
(22) Date of filing: 06.12.2001
(51) Int. Cl.: E01H 5/04, E01H 5/09, B62D 49/04, B62D 51/04, B62D 55/116

(54) **Snow remover**

(30) Priority: 19.07.2001 JP 2001219889; 03.09.2001 JP 2001265570
(71) Applicant: YANMAR AGRICULTURAL EQUIPMENT CO., LTD., Osaka-fu 530-0013 (JP); Yoka Industry Co., Ltd., Yabu-gun, Hyogo 667-0024 (JP)
(72) Inventor: Morimoto, Minoru, Yabu-gun, Hyogo 667-0024 (JP); Yoneda, Satoru, Yabu-gun, Hyogo 667-0024 (JP)
(74) Representative: Henkel, Feiler, Hänzel

(57) **Abstract**

A snow remover comprising a traveling device (50) provided at its front portion with an axle (4), a main frame (9) vertically rotatably provided on the axle (4), a snow-removing header (1) provided in front of the main frame (9) so as to be vertically rotatable together with the main frame (9) centering the axle (4), and an operation portion (40) provided at an upwardly rear ward portion of the main frame (9). The snow remover further comprises a lock lever (6) provided on the operation portion (40), a locking member (13) interlockingly connected with the lock lever (6) and provided on a rear portion of the traveling device (50), a fixture member (15) fixed on a rear portion of the main frame (9), and fixing means interposed between the locking member (13) and the fixture member (15). The locking member (13) can be locked or released with and from the fixture member (15) through the fixing means by operation of the lock lever (6), thereby adjusting the rotational angle of the main frame (9) and the snow-removing header (1) formed with the traveling device (50) centering the axle (4). The axle (4) is disposed behind a center of gravity in the snow remover. Biasing means (23) is interposed between a lower portion of the main frame (9) and a rear portion of the traveling device (50) so as to bias the snow-removing header (1) downward.

## Description

### Field of the Art

The present invention relates to a snow remover wherein the vertical position of a snow removing header (hereinafter, referred to as a "header") thereof can be adjusted with respect to the snow (ground) surface easily by operation of a lever.

### Related Art

Conventionally, a snow remover is provided with a header, whose vertical position can be adjusted in relative to the snow surface, so as to enable snow-removing whether the snow lies deep or shallow. For moving a header vertically, a large-sized snow remover uses an actuator driven by an engine or a motor, or a screwing means with a handle. For the same purpose, a small-sized snow remover uses a lever or a pedal, which is provided on a rear portion thereof, thereby saving power and costs and securing the compactness thereof.

The conventional small-sized snow remover is liable to fall into an error in the vertical positioning of the header thereof because the position for an operator behind the snow remover is inconvenient for seeing the header and the vertical position of the header is controlled at steps. If the header is excessively lowered, the ground surface is damaged by a plowing auger in the header. If it is unsufficiently lowered, the snow remains much after snow-removing.

Furthermore, the header of the snow remover is placed on the snow surface only with its empty weight. If the weight is light, the header may unexpectedly rise above the snow surface, thereby reducing the snow-removing efficiency.

### Disclosure of the Invention

An object of the invention is to provide such a snow remover constructed that a traveling device is provided at its front portion with an axle, a main frame is vertically rotatably provided on the axle, a header is provided in front of the main frame so as to be vertically rotatable together with the main frame centering the axle, and an operation portion is provided at an upwardly rear ward portion of the main frame, wherein the snow remover is improved so that the vertical position of the header in relative to the snow surface can be adjusted easily and securely.

To achieve the object, according to the present invention, the snow remover comprises: a lock lever provided on the operation portion; a locking member interlockingly connected with the lock lever and provided on a rear portion of the traveling device; a fixture member fixed on a rear portion of the main frame; and fixing means interposed between the locking member and the fixture member. The locking member can be locked or released with and from the fixture member through the fixing means by operation of the lock lever, thereby adjusting the rotational angle of the main frame formed with the traveling device centering the axle.

For adjusting the vertical position of the header in relative to the snow surface, the snow remover is released from hands of an operator who stands behind the snow remover while the lock lever is located to lock the locking member with the fixture member. The header is naturally placed on the snow surface with its empty weight. Then, the lock lever is operated so as to release the locking member from the fixture member so that the rear portion of the traveling device is rotated with its empty weight downward centering the axle freely from the main frame and placed on the snow surface. Thus, regardlessly of poor visibility of the header from the operator behind the snow remover, the header and the traveling device can be properly placed on the snow surface only by the simple operation of the lock lever.

Furthermore, in correspondence to the condition of the snow on the ground, the angle of inclination of the ground or so on, the header and the traveling device can be vertically moved and fixed so as to adjust the depth of the header from the snow surface by vertically moving a handle provided on the operation portion and by switching the lock lever.

The fixing means may be simply constituted by a bolt and a nut. The bolt is passed throgh a slot formed in the locking member. The nut is screwed on the bolt. The fixture member is disposed in a gap between a head of the bolt and the nut. The lock lever is operated so as to screw one of the bolt and the nut, thereby narrowing or widening the gap so as to fix or release the fixture member to and from the bolt and the nut.

The bolt passed through the slot of the locking member can steplessly slide in the slot, thereby enabling the vertical position of the header to be adjusted steplessly so as to contribute the best snow-removing corresponding to various needs.

The axle is disposed behind a center of gravity in the snow remover, thereby securing the natural falling of the header in the above mentioned adjustment of the vertical position of the header in relative to the snow surface.

Furthermore, biasing means is interposed between a lower portion of the main frame and a rear portion of the traveling device so as to bias the header downward, thereby further securing the natural falling of the header in the above mentioned adjustment of the-vertical position of the header in relative to the snow surface. Briefly, the header can be maintained at the vertical position where the header is adjusted due to its empty weight and the biasing force of the biasing means.

Other and further objects, features and advantages of the invention will appear more fully from the following description.

### BRIEF DESCRIPTION OF DRAWINGS/FIGURES

Fig. 1 is a perspective left side view of a snow remover according to the present invention;

Fig. 2 is a perspective rear view of a lower portion of a header 1 of the snow remover showing sledges 8 attached onto a plowing-auger cover 48;

Fig. 3 is a perspective rear view of the snow remover;

Fig. 4 is a perspective right side view of a rear portion of a main frame 9 of the snow remover showing a locking link mechanism for locking or releasing main frame 9 and header 1 with and from a traveling device 50;

Fig. 5 is a perspective left side view of the same;

Fig. 6 is a perspective left side view of the snow remover shown in Fig. 1, wherein header 1 locked with travel device 50 falls onto the snow surface before traveling device 50 is released from main frame 9 to be placed on the snow surface.

Fig. 7 is a perspective view of a mechanism for rotating a chute 47 including a motor 55 and a chute flange 49 provided on a blower cover 46 of header 1;

Fig. 8 is a rear view of motor 55 removed from the snow remover;

Fig. 9(a) is a perspective rear view of a battery 26 mounted on a rear portion of main frame 9 when a battery cover 65 is removed, and Fig. 9(b) is a perspective rear view of the same when battery cover 65 is attached;

Fig. 10 is a perspective left side view of the snow remover provided with a parking brake 70;

Fig. 11(a) is a left side view of parking brake 70 when a parking lever rod 78 is located at a parking position, and Fig. 11(b) is a left side view of the same when parking lever rod 78 is located at a release position;

Fig. 12 is a left side view of a brake base plate 71;

Fig. 13 is a plan view of the same;

Fig. 14 is a bottom view of the same;

Fig. 15 is a left side view of a brake arm plate 74 of parking brake 70;

Fig. 16 is a rear view of the same;

Fig. 17 is a front view of a parking lever rod 78;

Fig. 18 is a side view of a brake disc 79;

Fig. 19 is a plan view partly in section of the same;

Fig. 20 is a perspective left side view of the snow remover provided with a parking brake 90;

Fig. 21(a) is a left side view of parking brake 90 when a parking lever 39 is located at a parking position, and Fig. 21(b) is a left side view of the same when parking lever 39 is located at a release position;

Fig. 22 is a left side view of a brake arm plate 74 of parking brake 90; and

Fig. 23 is a plan view of parking lever 39.

### DETAILED DESCRIPTION OF THE PREFERRED EMBODIMENT

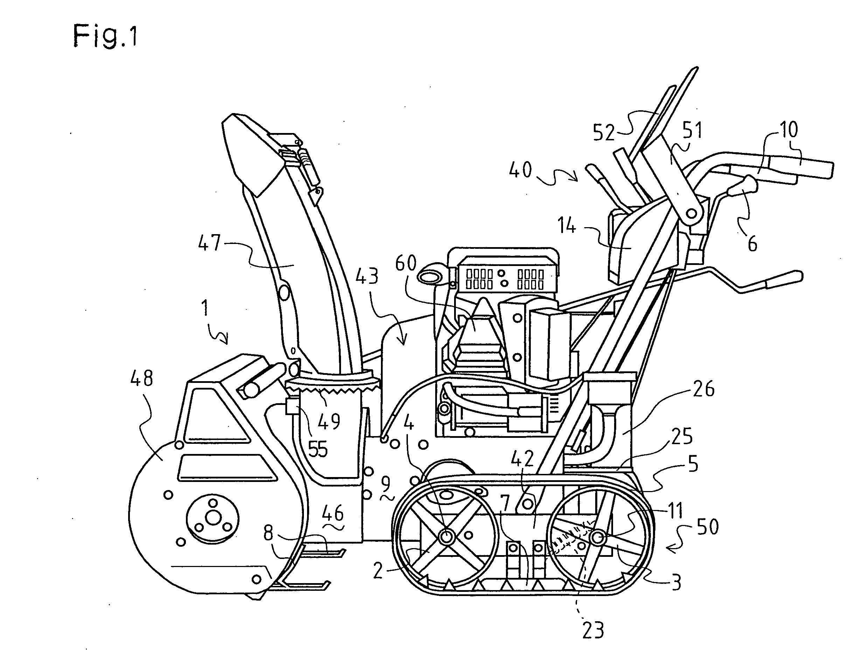

Description will be given of a general construction of a snow remover of the invention in accordance with Fig. 1 and others. A header 1 is disposed in front of a main frame 9. Header 1 comprises a blower, a plowing auger and a chute 47. The blower is disposed in a blower cover 46 continuously connected to the front end of main frame 9. Chute 47 for discharging snow laterally rotatably projects upward from blower cover 46. The plowing auger is covered with an auger cover 48 in front of blower cover 46.

The plowing auger and the blower are synchronously driven. The rotating plowing auger crashes the snow on the ground and carries the snow to the middle portion thereof. The blower upwardly blows the snow collected at the middle portion of the plowing auger. The blown snow is guided by chute 47 and discharged outward in an optional direction.

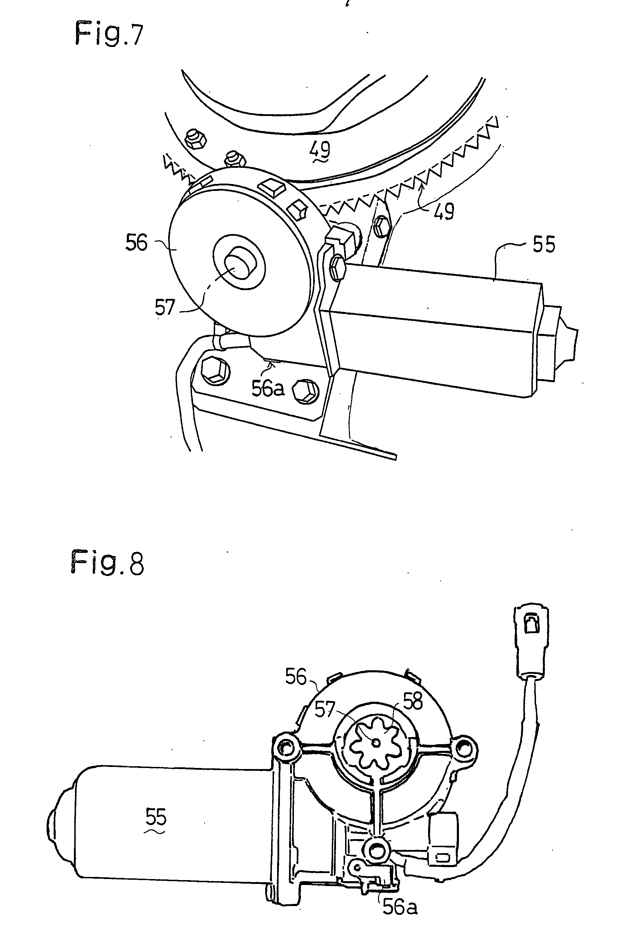

Chute 47 is integrally provided at its bottom with a chute flange 49. Chute flange 49 is rotatably mounted on the top of a chute base 46a which is upwardly formed of blower cover 46. Chute flange 49 is formed with a crown-cap-shaped gear 49a having downward teeth, which is drivingly connected to a motor 55 disposed below chute flange 49. Incidentally, the mechanism interposed between motor 55 and a front portion of chute flange 49 is covered with a cover. Fig. 1 illustrates the snow remover when the cover is removed therefrom. The mechanism for rotation of chute 47 will be detailed later in accordance with Figs. 7 and 8.

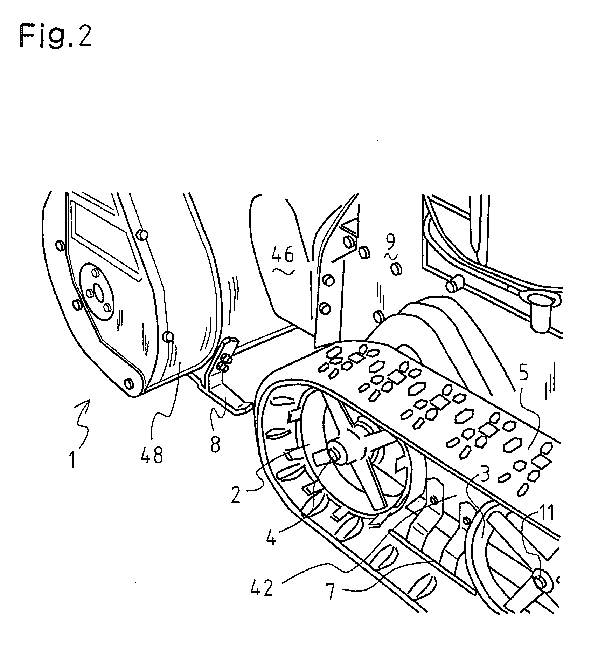

As shown in Figs. 1 and 2, a pair of sledges 8 are fixedly hung symmetrically disposed at a lower portion of header 1 so as to be put on the ground (snow surface). According to this embodiment, as shown in Figs. 1 and 2, the pair of sledges 8 are fixedly hung from left and right rear bottom portions of auger cover 48. Alternatively, sledges 8 may be attached to another part of header 1, e.g., blower cover 46. The positions of sledges 8 can be adjusted in a lateral direction of the snow remover at need. Also, the vertical positions of sledges 8 can be adjusted for fine adjustment of the bottom end of header 1 in relative to the snow surface.

Instead of sledges 8, rollers may be provided below blower cover 46. The vertical positions of the rollers may be adjusted.

A pair of left and right handles 10 are extended upwardly backward from the left and right rear ends of main frame 9. A control portion 40 is constituted above left and right handles 10. That is, a control box 14 is disposed between the top portions of handles 10. A travel clutch lever 51 and a snow-removing clutch lever 52, which are deadman clutch levers, are disposed on respective handles 10.

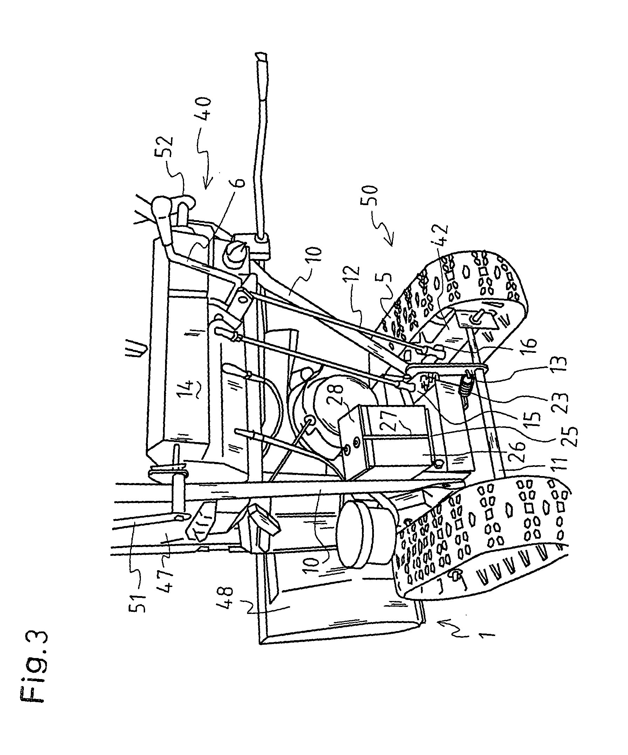

As shown in Fig. 3, a lock lever 6 is vertically rotatably provided on a rear portion of control box 14. As discussed later, lock lever 6 is operated to fix the vertical position of header 1.

An engine 60 is mounted on main frame 9. An output shaft projects forward from engine 60. A belt cover 43 is disposed on an upper portion of main frame 9. A transmission is disposed in a lower portion of main frame 9. A pulley fixed on the output shaft of engine 60 is disposed in belt cover 43 so as to transmit the power of engine 60 to both the transmission and header 1.

The transmission includes an HST. A front axle 4 serving as a travel-driving axle projects from the transmission in both lateral directions so as to penetrate main frame 9. Furthermore, each end of front axle 4 projects outward from a front portion of each of track frames 42 disposed outside respective left and right sides of main frame 9. Main frame 9 is pivoted onto front axle 4 so as to be tilted forward and backward. A pair of drive sprockets 2 are fixed onto respective outer ends of front axle 4. A rear axle 11 is laterally disposed between rear portions of left and right track frames 42. A pair of follower sprockets 3 are rotatably provided onto respective outer ends of rear axle 11. Drive and follower sprockets 2 and 3 outside each of track frames 42 are bound by a crawler belt 5. Thus, front and rear axles 4 and 11, left and right sprockets 2 and 3, track frames 42, crawler belts 5 and so on constitute a crawler type traveling device 50.

A battery base 25 projects backward from the rear end of main frame 9 below handles 10. A battery 26 is mounted on baterry base 25 and fixed thereto by a supporter 27 and a battery cover 28. Such a rear mounting of battery 26 balances the snow remover in the longitudinal direction thereof. Otherwise, battery 26 may be disposed in a front, left or right portion of the snow remover. The manner of mounting battery 26 will be detailed later in accordance with Fig. 8 (a) and (b).

Description will now be given of a mechanism for adjusting the vertical position of header 1. A header 1 integrally joined to main frame 9 and handles 10 can be rotated centering front axle 4 by vertically moving handles 10 so that the vertical position of header 1 can be steplessly adjusted according to the degree of vertical motion of handles 10. The whole range of vertical movement of header 1 which is larger than that of sledges 8 can be obtained.

Each crawler belt 5 contacts with the ground (the snow surface) at a pitch between sprockets 2 and 3. The grounding surface of each crawler belt 5 is pressed against the ground by a crawler guide 7 hung from track frame 42. Thus, the rigidity of grounding crawler belts 5 can be secured so as to prevent the snow remover from being vertically reversed however roughly header 1 may be moved vertically.

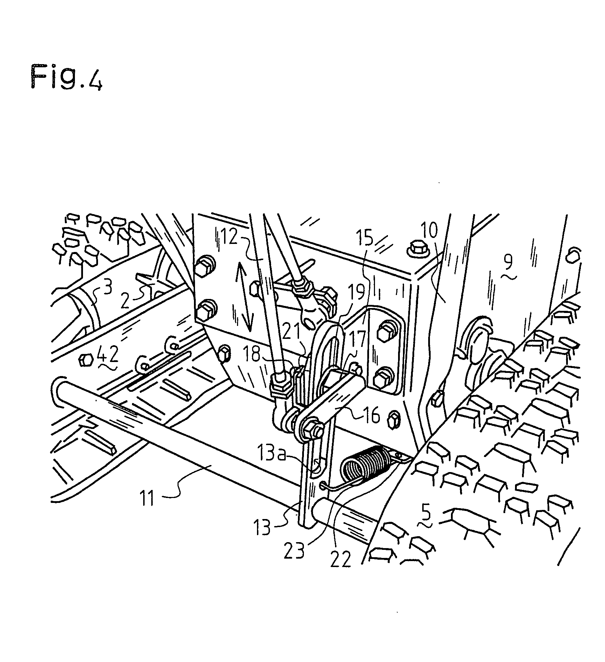

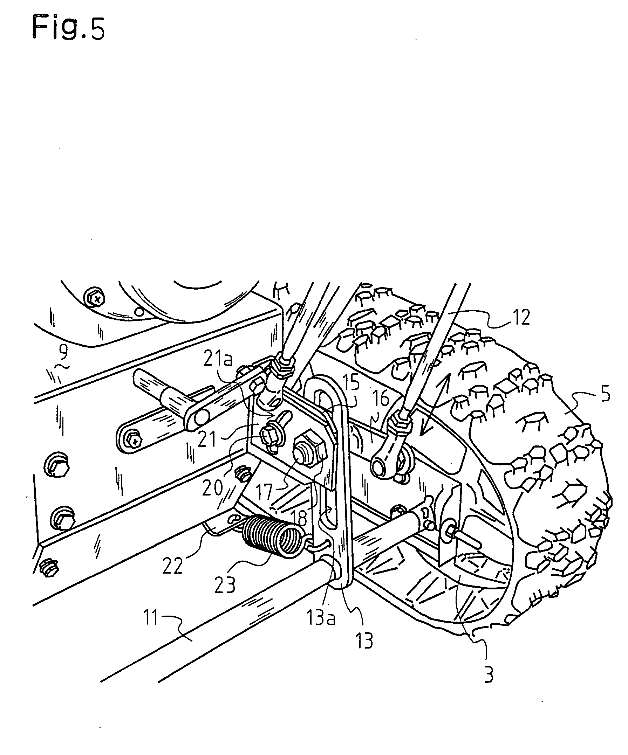

As shown in Figs. 4 and 5, in traveling device 50, rear axle 11 is rotatably supported between left and right track frames 42. A locking arm 13 is pivotally provided onto rear axle 11. A fixture plate 15 is extended backward from the rear end of main frame 9. Locking arm 13 can be fixed to fixture plate 15 by a bolt 17 and a nut 18. That is, bolt 17 is passed through a slot 13a formed in locking arm 13, fixture plate 15, a retaining plate 21 and nut 18.

A plain washer 19 is interposed between a head of bolt 17 and locking arm 13. Alternatively, any frictional washer may be provided so as to press the head of bolt 17 against locking arm 13, thereby fastening locking arm 13 to fixture plate 15 strongly. Furthermore, it may be replaced with a spring washer or a coned disc spring washer.

Retaining plate 21 is provided with a retaining hole which has a hexagonal shape in correspondence to the shape of nut 18. Thus, nut 18 screwed around bolt 17 is engaged in the retaining hole of retaining plate 21. Furthermore, retaining plate 21 is provided with a slot 21a. A bolt 20 is passed through slot 21a of retaining plate 21 and fixture plate 15, and screwed up by a nut so as to fasten retaining plate 21 to fixture plate 15.

The head end of bolt 17 is fixed to one end of an arm 16. The other end of arm 16 is pivotally connected to a bottom end of a substantially vertical connecting rod 12. A top end of connecting rod 12 is pivotally connected to an intermedicate portion of lock lever 6. Lock lever 6, which is verticaly rotatably provided on control box 14 as mentioned above, is disposed adjacently to one of handles 10 (in this embodiment, right handle 10) so as to facilitate its operation while handles 10 are held by hands.

Lock lever 6 can be switched between a lock position and a release position. By rotation of lock lever 6 between the two positions, connecting rod 12 is vertically moved so as to rotate arm 16 centering an axis of bolt 17, whereby bolt 17 is rotated around its axis together with arm 16 so as to change a distance between the head of bolt 17 and the nut 18 retained in retaining plate 21.

When lock lever 6 is located at the lock position, the distance is reduced so as to fasten locking arm 13 to fixture plate 15, thereby locking main frame 9 and header 1 with rear axle 11 of traveling device 50.

When lock lever 6 is located at the release position, the distance is increased so as to loosen locking arm 13 from fixture plate 15, thereby allowing main frame 9 and header 1 to rotate centering front axle 4 freely from rear axle 11 of traveling device 50, whereby the vertical position of header 1 can be changed. In other words, the rear end of traveling device 50 is allowed to rotate centering front axle 4 freely from main frame 9 and header 1.

Incidentally, in the disclosed embodiment, lock lever 6 is operated to rotate not nut 18 but bolt 17. Alternatively, it may be constructed that lock lever 6 is operated to rotate nut 18 while bolt 17 is retained. All the requirement for locking or releasing locking arm 13 with and from fixture plate 15 is to change the gap between the head of bolt 17 and nut 18 in which fixture plate 15 is sandwiched.

While lock lever 6 is located at the release position, handles 10 held by an operator's hands are vertically moved so as to rotate main frame 9 and header 1 centering front axle 4 while bolt 17 being guided along slot 13a, thereby adjusting the height of header 1. When the vertical location of header 1 is completed, lock lever 6 is switched to the lock position so as to fix header 1 at its height.

For adjusting the original distance between the head of bolt 17 and nut 18 (when lock lever 6 is located at the lock position), the nut provided on bolt 20 is loosened, retaining plate 21 is rotated centering the axis of bolt 17 while guiding bolt 20 along slot 21a so as to change the angle of nut 18 in relative to bolt 17, and then the nut on bolt 20 is screwed up to fasten retaining plate 21 to fixture plate 15. If locking arm 13 is worn away by frequent operation of lock lever 6, this adjusting work is appropriated.

However, this adjusting work can be performed only while bolt 20 is allowed to slide in slot 21a. If the degree of abrasion of locking arm 13 exceeds the limit of that with which such rotation of retaining plate 21 deals, the nut is removed from bolt 20 and retaining plate 21 is removed from nut 18. Then, nut 18 is screwed along bolt 17 so as to fasten locking arm 13 to fixture plate 15 adequately. Finally, retaining plate 21 is engaged with nut 18 and the nut is screwed up on bolt 20 so as to fasten retaining plate 21 to fixture plate 15.

Header 1 can be rotated centering front axle 4 only while bolt 17 is allowed to slide in slot 13a. Header 1 is constructed so as to be inclined forwardly downward even if it is located at its upper limit height. That is, the center of gravity in the snow remover is constantly located in front of front axle 4 in spite of adjustment of the height of header 1.

Furthermore, as shown in Figs. 4 and 5, a stay 22 projects backward from a bottom rear end of main frame 9. A spring 23 is interposed between stay 22 and a bottom portion of locking arm 13 so as to bias main frame 9 and header 1 toward rear axle 11. Consequently, the front end of header 1 is biased downward by spring 23. Thus, the resultant downward force as combination of the empty weight of header 1 and the biasing force of spring 23 is applied on header 1 so as to maintain the center of gravity in the snow remover in front of front axle 4 except on extraordinary occasions such that the snow remover ascends an extremely steep slope.

Spring 23 is a stretched spring. Otherwise, the front end of header 1 may be biased downward by any spring such as a compressed spring, a twisted spring or a plate spring, or an actuator other than springs, e.g., a motor or a cylinder.

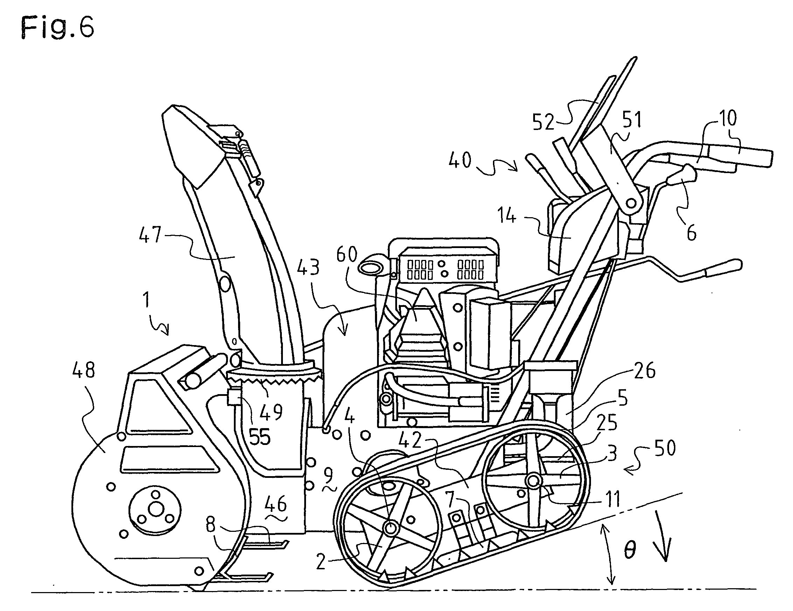

Processes for locating header 1 and traveling device 50 will be described in accordance with Fig. 6. While lock lever 6 is located at the lock position, handles 10 are released from an operator's hands. Due to the downward force applied onto header 1, main frame 9 is rotated centering front axle 4 so as to bring header 1 (or sledges 8 of header 1) in contact with the snow surface. At this time, if header 1 is locked with rear axle 11 at its upper limit, the rear end of traveling device 50 is raised above the snow surface while its front end abuts against the snow surface, as shown in Fig. 6. Consequently, traveling device 50 is inclined at an angle θ from the snow surface.

Then, lock lever 6 is rotated to the release position so as to make rear axle 11 of traveling device 50 free from main frame 9 and header 1. Thus, the rear end of traveling device 50 falls with its empty weight, thereby bringing the entire bottom surface of crawler belts 5 into contact with the snow surface. Finally, lock lever 6 is returned to the lock position so as to fix traveling device 50 to main frame 9 and header 1, thereby completing the location of header 1 and traveling device 50.

As mentioned above, only by releasing handles 10, header 1 is naturally placed on the snow surface adequately before traveling device 50 is placed on the snow surface. Thus, header 1 is safe from error in its location with respect to the snow surface.

Incidentally, as mentioned above, the fixture positions of sledges 8 onto auger cover 48 may be adjusted in a vertical direction. As sledges 8 are lowered, the snow remaining after snow-removing is increased.

In the preferred embodiment, lock lever 6, rear axle 11 and main frame 9 are interlockingly connected with one another by the above-mentioned mechanical linkage. Alternatively, an actuator, e.g., a hydraulic cylinder, may be provided. For example, it may be thought that the hydraulic cylinder is actuated to raise the front end of header 1 and then the front end of header 1 or the rear end of traveling device 50 is dropped with its empty gravity, thereby automatically locating header 1 and traveling device 50 with respect to the snow surface without the operation (of lock lever 6) for locking/releasing header 1 and main frame 9 with and from traveling device 50.

Referring to Figs. 7 and 8, the mechanism for rotation of chute 47 will now be described. As mentioned above, chute flange 49 formed at the bottom of chute 47 is provided with crown-cap shaped gear 49a having downward teeth. Correspondingly, motor 55 is disposed on blower cover 46 below a front portion of chute flange 49. Motor 55 is connected at its right end with a worm wheel housing 56. Motor 55 has a lateral worm which is housed in worm wheel housing 56. A worm wheel is housed in worm wheel housing 56 so as to engage with the worm. A worm wheel shaft 57 serving as an axis of the worm wheel projests backward from worm wheel housing 56. As shown in Fig. 8, a gear 58 is fixed on a rear end of worm wheel shaft 57 so as to engage with gear 49a of chute flange 49. Therefore, the power of motor 55 is transmitted to gear 49a so as to rotate chute 47.

As mentioned above, motor 55, worm wheel housing 56 and a front portion of chute flange 49 are usually covered with a cover. Particularly when the cover is removed or whether the cover is provided or not, worm wheel housing 56 may be subjected to dew condensation which results in that water enters worm wheel housing 56. Thus, as shown in Figs. 7 and 8, worm wheel housing 56 is provided at the bottom portion thereof with a drain port 56a which is downwardly open so as to naturally drain water therefrom.

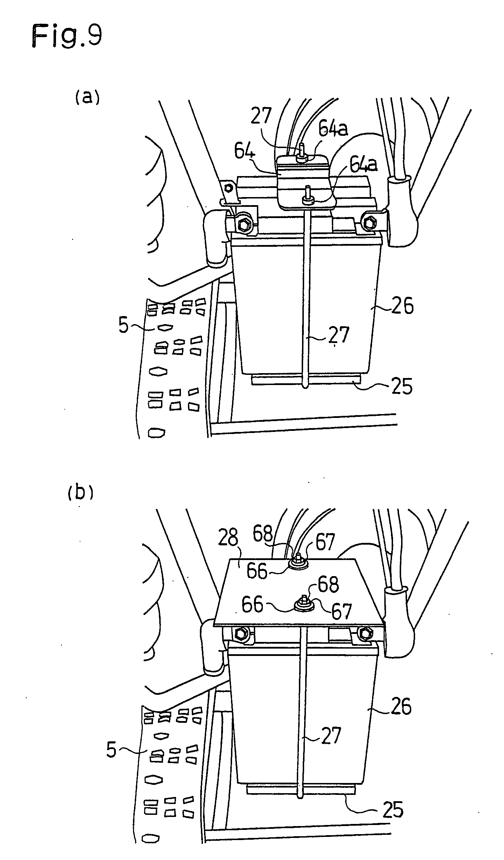

The arrangement of battery 26 will now be detailed in accordance with Fig. 9. As shown in Fig. 9 (a), each of supporters 27 is formed of a rod which is bent in a J-like shape so as to provide a vertical portion and a longitudinal bottom portion. The vertical portion of each of supporters 27 is disposed along a lateral middle portion of each of front and rear surfaces of battery 26 mounted on battery base 25. The longitudinal bottom portion of supporter 27 is disposed along the bottom surface of battery base 25.

A sectionally U-like recessed cap plate 64 is put on the top of battery 26. The front and rear horizontal surfaces of cap plate 64 are formed at their lateral middle portions with respective bosses 64a. The top ends of supporters 27 are passed upward through respective bosses 64a of cap plate 64. Battery cables are connected to terminals of battery 26. Then, as shown in Fig. 9 (b), battery cover 28 having a pair of holes is disposed on the top of cap plate 64 so as to engage bosses 64a in the respective holes of battery cover 28, thereby making the tops of supporters 27 project upward from battery cover 28. Buffers 66 like cylindrical rubbers are provided around respective the top projecting portions of supporters 27. Plain washers 67 are put on respective buffers 66 and then nuts 68 are screwed up around resective supporters 27 on respective plain washers 67, thereby fastening battery 26 between battery base 25 and battery cover 28. Buffers 66 prevent battery cover 28 from being damaged by nuts 68.

Only by loosening nuts 68, supporters 27 are released from the bottom of batery base 25 so as to allow battery 26 to be removed from battery base 25, thereby facilitating the maintenance of battery 26.

Conventionally, a baterry is mounted on an plowing-auger cover of a snow-removing header. However, the snow is liable to be collected on the plowing-auger cover. Also, the battery must be located on the plowing-auger cover in consideration of chute 47 which rotates and discharges the snow. Battery 26 disposed behind main frame 9 according to the present embodiment is safe from such problems. Furthermore, this arrangement of battery 26 makes a good balance in the snow remover between header 1 and the rear portion of the snow remover.

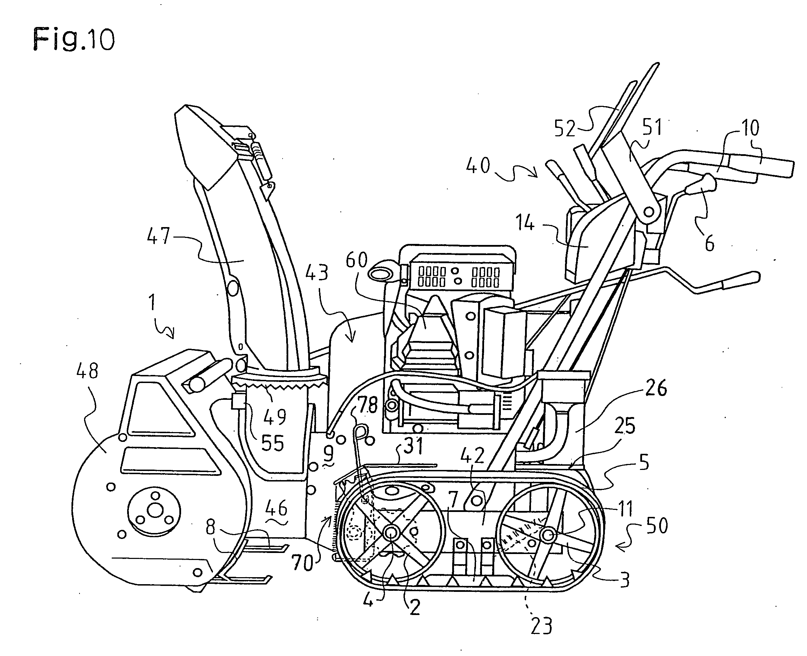

Description will now be given of the snow remover further installed with a parking brake 70 in accordance with Figs. 10 to 19. The same parts with those of the snow remover of Figs. 1 to 9 are designated by the same reference numerals, respectively.

As shown in Fig. 10, parking brake 70 is interposed between an outer side surface (in this embodiment, a left side surface) of main frame 9 and front axle 4 so as to brake front axle 4 for braking the snow remover.

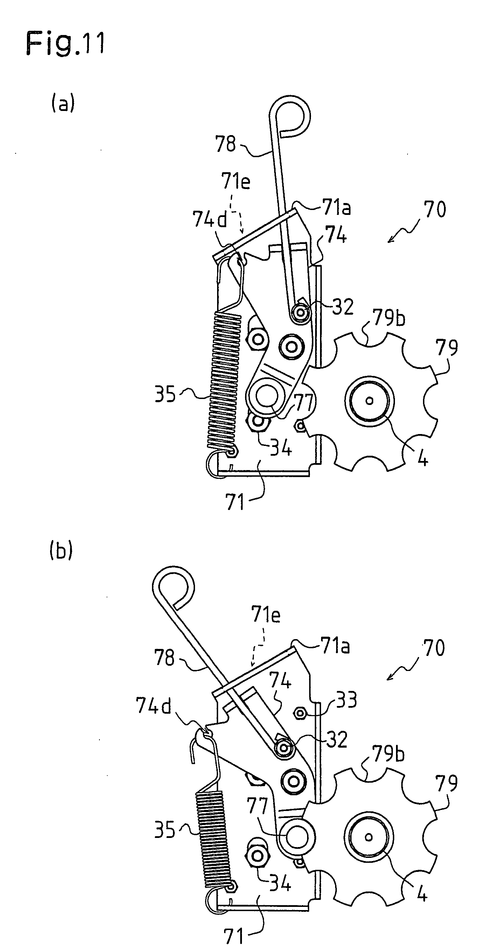

As shown in Fig. 11, parking brake 70 comprises a brake base plate 71, a brake arm plate 74, a parking lever rod 78, a brake disc 79 and so on.

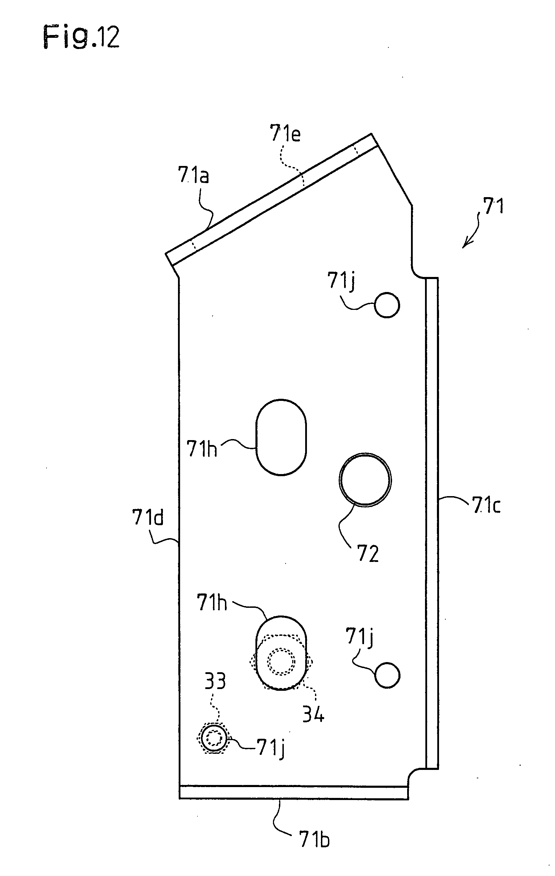

As shown in Fig. 12, brake base plate 71 is a vertical plate perpendicularly bent outward (leftward) at its top, bottom and rear ends so as to form a top surface 71a, a bottom surface 71b and a rear surface 71c, respectively. The remaining vertical plate surface serves as a main surface 71d.

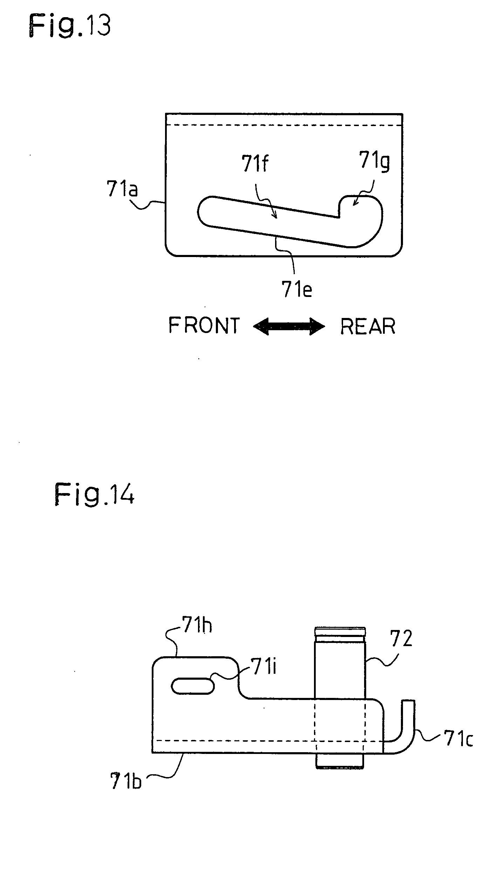

Top surface 71a is inclined upwardly backward. As shown in Fig. 13, top surface 71a is bored with a lever slot 71e in an L-like shape, which consists of a guide slot 71f and a retaining slot 71g. Guide slot 71f is extended substantially longitudinally. Retaining slot 71g is extended from a rear end of guide slot 71f at a right angle.

Bottom surface 71b is laid horizontally. As shown in Fig. 14, a front end portion of bottom surface 71b is expanded outward so as to form an expanded portion 71h. Expanded portion 71h is bored with a slot 71i for providing a spring 35.

Referring to Fig. 12, rear surface 71c is provided for reinforcing brake base plate 71. In front of rear surface 71c, a fulcrum shaft 72 projects outward from a vertically center portion of main surface 71d. Main surface 71d is bored at its optimal portions with small bolt holes 71j and large slots 71h. Into the outer side surface of main frame 9 are screwed small bolts 33 through respective bolt holes 71j, and large bolts 34 through respective slots 71h, thereby fixing brake base plate 71 to main frame 9.

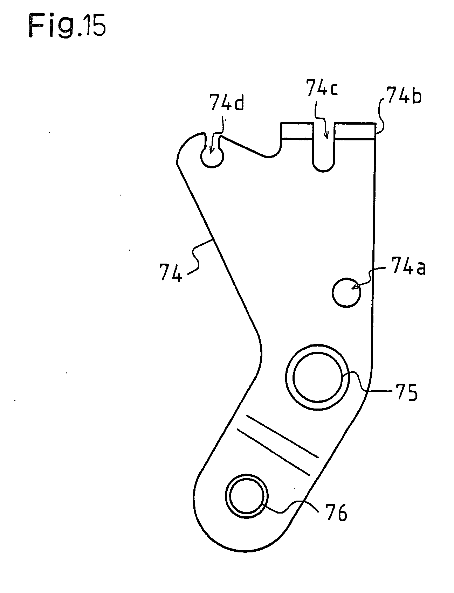

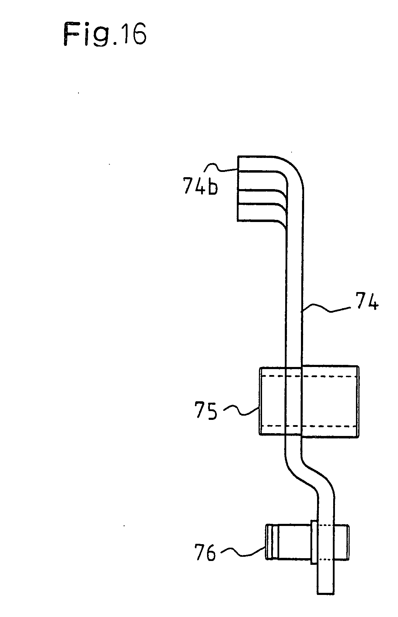

As shown in Figs. 15 and 16, brake arm plate 74 is a doglegged plate. A brake fulcrum collar 75 projects from an intermediate bent portion of brake arm plate 74. Brake fulcrum collar 75 is rotatably provided arround fulcrum shaft 72 so as to provide brake arm plate 74 rotatably in relative to brake base plate 71. A bearing shaft 76 projects outward from a lower end portion of brake arm plate 74. As shown in Fig. 11, a bearing 77 is provided onto an outer (left) end of bearing shaft 76.

Brake arm plate 74 is bored with a bolt hole 74a just above brake fulcrum collar 75. A rear top portion of brake arm plate 74 is bent outward (leftward) at a right angle so as to form an upper surface 74b. Upper surface 74b is provided at a longitudinally middle portion thereof with a notch 74c. Brake arm plate 74 is provided at its front top portion with a notch 74d.

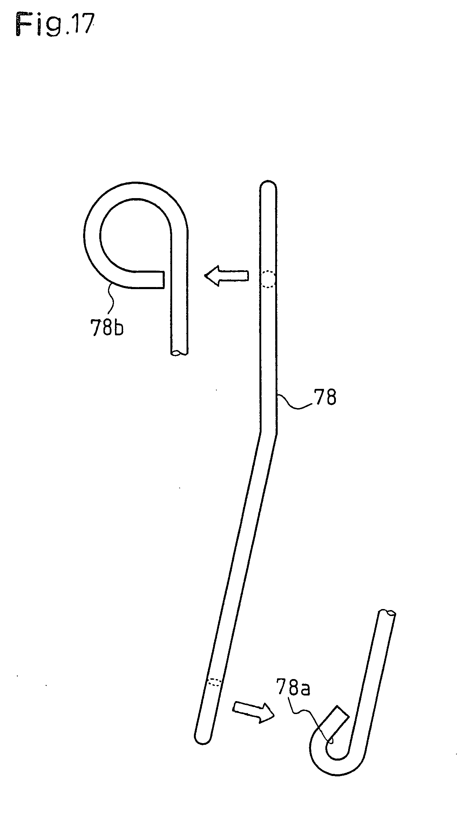

Referring to Fig. 17, parking lever rod 78 is curved at its both ends into ring shapes. One end ring of parking lever rod 78 is formed with an insert hole 78a so as to attach parking lever rod 78 to brake arm plate 74. The other end ring of brake lever 78 which is larger than the ring forming insert hole 78a serves as a knob 78b to be fingered.

A bolt is inserted outward into insert hole 78a of parking lever rod 78 through bolt hole 74a of brake arm plate 74. A nut 32 is screwed up on the outer portion of the bolt toward insert hole 78a so as to fasten parking lever rod 78 to brake arm plate 74, as shown in Fig. 11. Parking lever rod 78 is guided at its intermediate portion through notch 74c of brake arm plate 74, and passed through lever slot 71e in upper surface 71a of brake base plate 71 so as to make the upper end of parking lever rod 78, i.e., knob 78b project upward from upper surface 71a.

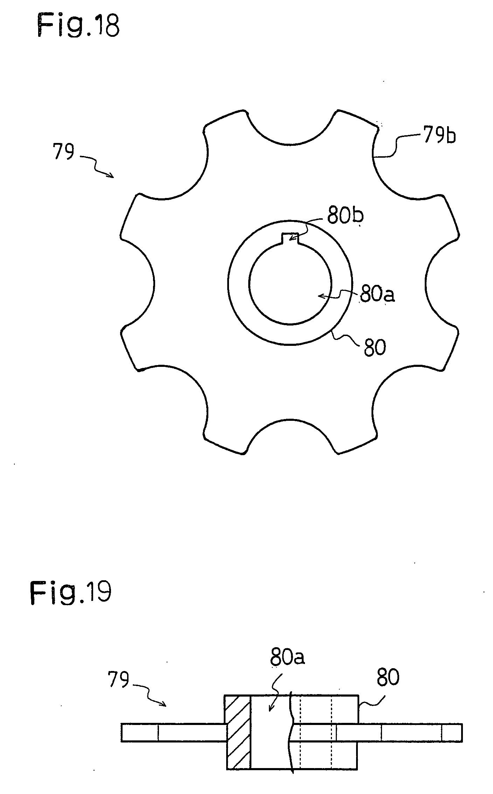

As shown in Figs. 18 and 19, brake disc 79 is formed along its periphery with a plurality of semicircular recesses 79b at regular intervals in correspondence to the periphery of bearing 77 on bearing shaft 76. Brake disc 79 is fixedly provided at the center thereof with a boss 80 having an axial hole 80a with a key slot 80b. The left end portion of front axle 4 is inserted into axial hole 80a of boss 80 while a key formed on front axle 4 being inserted into key slot 80b, whereby brake disc 79 is allowed to rotate together with front axle 4.

As shown in Fig. 11, spring 35 is interposed between brake base plate 71 and brake arm plate 74. One end of spring 35 is hooked on slot 71i of brake base plate 71, and the other end thereof on notch 74d of brake arm plate 74.

Description will be given of operation and advantage of parking brake 70. Parking lever rod 78 is biased forward by spring 35 so as to be located at the front end of guide slot 71f of lever slot 71e in brake base plate 71, as shown in Fig. 11 (b). When parking lever rod 78 is pulled backward along guide slot 71f against the biasing force of spring 35, brake arm plate 74 is rotated centering fulcrum shaft 72 backward together with parking lever rod 78 so as to make bearing 77 apart from recess 79b of brake disc 79, thereby making brake disc 79 and front axle 4 free from bearing 77. At last, parking lever rod 78 reaches the rear end of guide slot 71f, and then, parking lever rod 78 is slightly pulled inward (rightward) so as to be retained in retaining slot 71g of lever slot 71e, as shown in Fig. 11 (a), thereby maintaining the free condition of front axle 4.

Only by a slightly outward (leftward) rotational operation of parking lever rod 78, parking lever rod 78 is removed from retaining slot 71g, and then, naturally rotated forward along guide slot 71f because of the biasing force of spring 35. The more parking lever rod 78 is rotated forward, the more bearing 77 is rotated backward. Finally, as shown in Fig. 11 (b), parking lever rod 78 reaches the front end of guide slot 71f so that bearing 77 is pressed into one of recesses 79b of brake disc 79, thereby locking front axle 4 with main frame 9 through parking brake 70 so as to hold the snow remover in stationary even on a slope securely.

If the parking-braked snow remover is going to be forcibly moved, front axle 4 locked by parking brake 70 is forcibly rotated so that bearing 77 engaged in one of recesses 79b of brake disc 79 is pushed up by brake disc 79 rotated together with front axle 4 so as to be removed from recess 79b. However, during the rotation of brake disc 79, bearing 77 removed from one recess 79b is pressed into the next recess 79b soon because bearing 77 is biased backward toward brake disc 77 by spring 35. Consequently, unless parking lever rod 78 is retained in retaining slot 71g, bearing 77 in contact with the outline edge of brake disc 79 is rotated centering its axis according to the rotation of brake disc 79 with front axle 4 so as to be reciprocated forward and backward, thereby making parking lever rod 78 swing forward and backward. At every time when bearing 77 is pressed into each recess 79b, parking lever rod 78 is hit on the front edge of guide slot 71f, thereby making a sound, which calls an operator's attention to releasing of the parking-braked condition of the snow remover.

The curvature of recess 79b is coincident with that of circular bearing 77 so that bearing 77 can be steadily engaged in recess 79b for locking front axle 4. However, in the present embodiment, considering the biasing force of spring 35 and a size (radius) of brake disc 79, the maximum depth of each recess 79b is smaller than the normal radius with respect to its curvature, that is, the radius of bearing 77. Therefore, if locked front axle 4 is forcibly rotated, bearing 77 can be removed from one recess 79b and enter the next recess 79b comparatively smoothly. Furthermore, each edge of brake disc 79 between adjacent recesses 79b is rounded off, thereby being prevented from damaging bearing 77 moving thereover between adjacent recesses 79b.

The depth of each recess 79b, the force of spring 35 or the size of brake disc 79 may be increased if the braking force applied to brake disc 79 is requested to be larger.

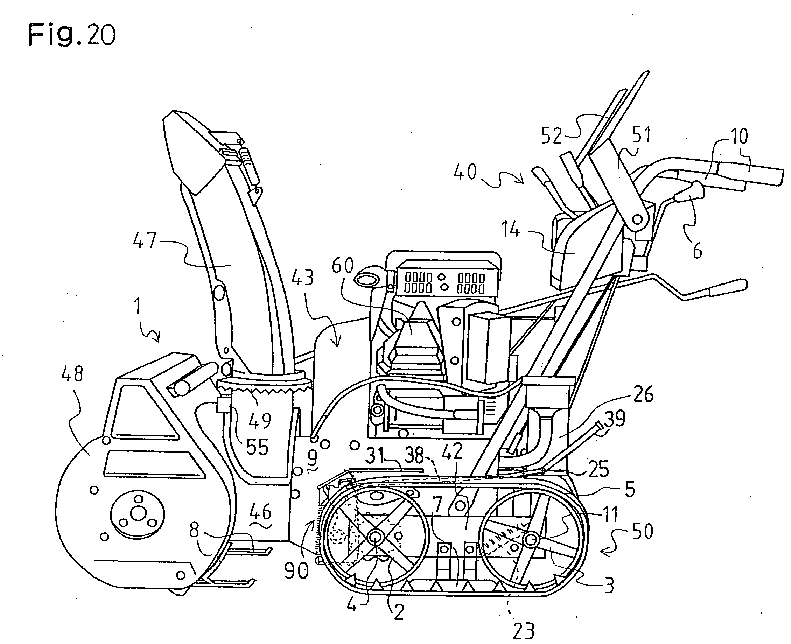

The snow remover shown in Fig. 20 is provided with another parking brake 90 which is almost similar with parking brake 20, except that parking lever rod 78 is replaced with a parking lever 39 connected to brake arm plate 74 through a link rod 38. Description will now be given of parking brake 90 in accordance with Figs. 20 to 23.

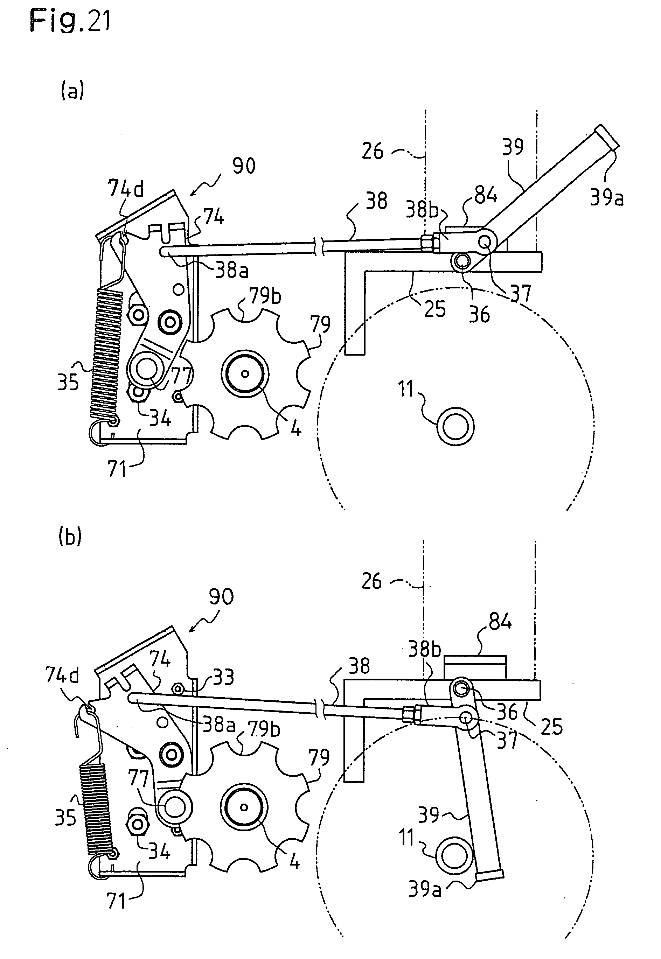

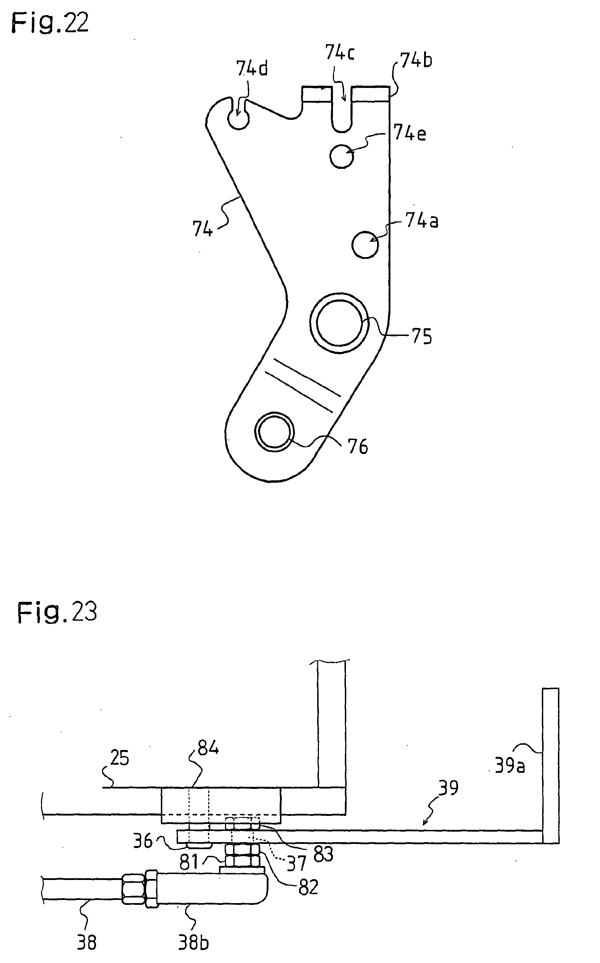

Referring to Fig. 21 and 22, brake arm plate 74 for constituting parking brake 90 is further provided with a hole 74e. This brake arm plate 74 having hole 74e may be used for constituting parking brake 70. A front end portion 38a of link rod 38 is bent inward (rightward) so as to be rotatably passed through hole 74e. A retaining pin is radially passed through front end portion 38a of link rod 38 projecting inward from hole 74e, thereby preventing link rod 38 from escaping from brake arm plate 74.

Referring to Fig. 21 and 23, a rear end portion of parking lever 39 is bent inward (rightward) in a right angle so as to form a handle 39a. A front end of parking lever 39 is pivoted through a lever pivot 36 onto an outer side surface of a left portion of main frame 9 which constitutes battery base 25. A rear end portion 38b of link rod 38 is pivoted through a rod pivot 37 onto an intermediate portion of parking lever 39.

As shown in Fig. 23, nuts 81 and 82 are screwed up around rod pivot 37 between rear end portion 38b of link rod 38 and parking lever 39. Inside (on the right side) of parking lever 39, a nut 83 is screwed up around the inward end of rod pivot 37. A stopper 84 is mounted on a left end frame portion of batery base 25 so that, if parking lever 39 is rotated upward, nut 83 comes to abut against stopper 84 so as to locate parking lever 39 at its upper limit position serving as a release position.

Consequently, parking lever 39 is interlockingly connected to brake arm plate 74 through link rod 38. Parking lever 39 is disposed at the rear portion of the snow remover and provided with handle 39a, thereby facilitating its operation by an operator standing behind the snow remover.

The operation of parking lever 39 will be described. When parking lever 39 is upwardly rotated from the parking position shown in Fig. 15(b), link rod 38 is pulled backward so as to rotate the top of brake arm plate 74 backward, thereby separating bearing 77 on the bottom of brake arm plate 74 from recess 79b of brake disc 79. The backward rotation of the top of brake arm plate 74 causes spring 35 to over-center, thereby biasing parking lever 39 upward. Finally, nut 83 comes to abut against stopper 84 so as to stop the upward rotation of parking lever 39. Thus, parking lever 39 is retained at the release position, as shown in Fig. 15(a).

On the other hand, when parking lever 39 is rotated downward from the release position shown in Fig. 15(a), link rod 38 is pushed forward so as to make spring 35 over-center. Then, sprig 35 biases parking lever 39 downward so as to rotate the top of brake arm plate 74 forward, thereby making bearing 77 enter one of recesses 79b of brake disc 79 so as to brake front axle 4. Finally, downward rotated parking lever 39 comes to abut against rear axle 11 so as to be retained at the parking position as shown in Fig. 15(b).

If the snow remover is forcibly moved while parking lever 39 is retained at the parking position, brake disc 79 is forcibly rotated together with front axle 4 so that bearing 77 goes in and out of recesses 79b of brake disc 79. Accordingly, link rod 38 reciprocates forward and backward so as to swing parking lever 39 up and down. The locking condition of parking brake 90 can be noticed because of the sound generated at every time when parking lever 39 is stroken against rear axle 11.

Furthermore, in comparison with parking brake 70 having parking lever rod 78 disposed in front of rear axle 11, parking lever 39 of parking brake 90 disposed behind rear axle 11 can be seen well by an operator standing behind the snow remover, thereby quickening the upper rotational operation of parking lever 39 for releasing of the parking-braked condition. Incidentally, parking lever 39 may be made more conspicuous by painting or any other means.

As mentioned above, if parking brake 70 is used, the sound of parking lever rod 78 striking brake base plate 71 makes the operator aware of the parking-braked condition of the traveling snow remover. If parking brake 70 is used, the operator can hear the sound of parking lever 39 striking rear axle 11 and see parking lever 39 swinging, thereby becoming aware of the parking-braked condition of the traveling snow remover.

As shown in Fig. 10 and 20, above each of parking brakes 70 and 90 may be provided a parking brake cover 31 projecting laterally from main frame 9 so as to protect parking brake 70 or 90 from snow or stones and to protect an operator from parking brake 70 or 90 in operation.

Each of parking brakes 70 and 90, which is provided on the left side portion of the snow remover in the above-mentioned embodiments, may be provided on the right side portion of the snow remover. Brake disc 79 may be provided on rear axle 11. Correspondingly, brake base plate 71, brake arm plate 74 and the like provided on main frame 9 may be shifted backward.

Conventionally, if a snow remover without a parking brake is going to be provided with a parking brake, a transmission housing no parking brake must be replaced with another transmission housing a parking brake, thereby requiring intricate labours and increasing costs.

According to the present embodiments, the snow remover originally having no parking brake can be easily provided with a parking brake. That is, all required to do for providing a parking brake to the snow remover is to attach parking brake 70 or 90 onto outside portions of main frame 9 and front axle 4 while the original parts including a transmission are used as they are. Parking brake 70 or 90 mounted on the outside portion of the snow remover facilitates the maintenance thereof. On the other hand, parking brakes 70 and 90 can be easily removed from main frame 9 and front axle 4.

It is further understood by those skilled in the art that the foregoing description is a preferred embodiment of the disclosed device and that various changes and modifications may be made in the invention without departing from the spirit and scope thereof.

## Claims

1. A snow remover comprising:
a traveling device (50) provided at its front portion with an axle (4);
a main frame (9) vertically rotatably provided on said axle (4);
a snow-removing header (1) provided in front of said main frame (9) so as to be vertically rotatable together with said main frame (9) centering said axle (4); and
an operation portion (40) provided at an upwardly rear ward portion of said main frame (9),
**characterized in that** said snow remover further comprises:
a lock lever (6) provided on said operation portion (40);
a locking member (13) interlockingly connected with said lock lever (6) and provided on a rear portion of said traveling device (50);
a fixture member (15) fixed on a rear portion of said main frame (9); and
fixing means interposed between said locking member (13) and said fixture member (15), wherein said locking member (13) can be locked or released with and from said fixture member (15) through said fixing means by operation of said lock lever (6), thereby adjusting the rotational angle of said main frame (9) and said snow-removing header (1) formed with said traveling device (50) centering said axle (4).

2. The snow remover as set forth in claim 1, **characterized in that** said locking member (13) is formed with a slot (13a),
said fixing means comprises:
a bolt (17) passed throgh said slot (13a); and
a nut (18) screwed on said bolt (17), wherein said fixture member (15) is disposed in a gap between a head of said bolt (17) and said nut (18), and wherein said lock lever (6) is operated so as to screw one of said bolt (17) and said nut (18), thereby narrowing or widening said gap so as to fix or release said fixture member (15) to and from said bolt (17) and said nut (18).

3. The snow remover as set forth in claim 1 or 2, **characterized in that** said axle (4) is disposed behind a center of gravity in said snow remover.

4. The snow remover as set froth in any of claims 1 to 3, biasing means (23) is interposed between a lower portion of said main frame (9) and a rear portion of said traveling device (50) so as to bias said snow-removing header (1) downward.
